# EUROPÄISCHE PATENTANMELDUNG

(11) **EP 0 895 068 A2**
(43) Veröffentlichungstag der Anmeldung: **03.02.1999**
(21) Anmeldenummer: 98112958.8
(22) Anmeldetag: 13.07.1998
(51) Int. Cl.: G01F 23/36

(54) **Füllstandssensor**

(30) Priorität: 31.07.1997 DE 19732981
(71) Anmelder: Mannesmann VDO Aktiengesellschaft, 60388 Frankfurt am Main (DE)
(72) Erfinder: Günther, Klaus-Peter, 65326 Aarbergen (DE)
(74) Vertreter: Klein, Thomas, Dipl.-Ing.

(57) **Zusammenfassung**

Bei einem Füllstandssensor für einen Kraftstoffbehälter eines Kraftfahrzeuges ist ein einen Hebeldraht (3) halternder Bügel (2) einteilig mit einem Lagerzapfen (9) gefertigt. Der Lagerzapfen (9) wird in einer Bohrung (8) eines Trägerteils (1) geführt. An seinem freien Ende hat der Lagerzapfen (9) einen radial nach außen hin vorgespannten Rastvorsprung (10), der das Trägerteil (1) hintergreift. Der Rastvorsprung (10) wird von dem Hebeldraht (3) gegen ein unbeabsichtigtes Wegbiegen gesichert.

## Beschreibung

Die Erfindung betrifft einen Füllstandssensor, insbesondere zur Erzeugung von elektrischen Signalen in Abhängigkeit von einem Füllstand einer Flüssigkeit in einem Behälter, mit einem eine Bohrung für eine Lagerung aufweisenden Trägerteil, mit einem in der Lagerung schwenkbar und axial unverschieblich gehaltenen, einen Regler in Abhängigkeit von seinem Stellwinkel betätigenden Bügel und mit einem an dem Bügel befestigten, einen Schwimmer aufweisenden Hebeldraht.

Solche Füllstandssensoren werden in heutigen Kraftfahrzeugen beispielsweise zur Ermittlung eines Füllstandes an Kraftstoff in einem Kraftstoffbehälter eingesetzt und sind aus der Praxis bekannt. Hierbei übergreift der Bügel das Trägerteil im Bereich der Bohrung der Lagerung und weist eine mit dieser Bohrung fluchtende Bohrung auf. Als Lagerzapfen dient hierbei ein Ende des Hebeldrahtes, welches die Bohrungen des Trägerteils und des Bügels durchdringt. Der Hebeldraht ist mittels einer Rastverbindung mit dem Bügel verbunden und haltert mit seinem zweiten Ende einen dem Kraftstoffspiegel im Kraftstoffbehälter folgenden Schwimmer.

Nachteilig bei dem bekannten Füllstandssensor ist, dass der Bügel und das Trägerteil eine geteilte Lagerstelle aufweisen. Hierdurch müssen die Bohrungen des Trägerteils und des Bügels für eine möglichst reibungsarme Bewegung des Bügels genau fluchten. Deshalb stellen die Bauteile des bekannten Füllstandssensors fertigungstechnisch schwierig zu fertigende Bauteile dar. Bei dem bekannten Füllstandssensor kann zudem ein Grat des Hebeldrahtes bei der Montage die Bohrungen beschädigen und anschließend zu einer Blockierung der Bewegung des Bügels führen.

Der Erfindung liegt das Problem zugrunde, einen Füllstandssensor der eingangs genannten Art so zu gestalten, dass er möglichst kostengünstig zu fertigen ist und eine leichtgängige Bewegung des Bügels ermöglicht.

Dieses Problem wird erfindungsgemäß dadurch gelöst, dass der Bügel einen Lagerzapfen der Lagerung aufweist.

Durch diese Gestaltung lässt sich der Bügel mit dem Lagerzapfen unmittelbar in die Bohrung des Trägerteils einsetzen. Hierdurch werden die schwierig zu fertigenden fluchtenden Bohrungen des Trägerteils und des Bügels vermieden. Das Trägerteil und der Bügel sind deshalb besonders kostengünstig, beispielsweise aus Kunststoff in axial entformbaren Spritzgießformen herstellbar. Weiterhin kann ein Grat des Hebeldrahtes nicht mehr zu einer Beschädigung der Bohrungen der Lagerung führen. Deshalb wird dank der Erfindung eine leichtgängige Bewegung des Bügels zuverlässig gewährleistet.

Die Lagerzapfen könnte beispielsweise ein in den Bügel eingepresster Bolzen sein. Zur weiteren Verringerung der Fertigungskosten des Bügels trägt es jedoch gemäß einer vorteilhaften Weiterbildung der Erfindung bei, wenn der Bügel einteilig mit dem Lagerzapfen gefertigt ist.

Bei aus Kunststoff gefertigten Lagerzapfen und Trägerteil sind Lagerzapfen und Lagerbohrung fertigungsbedingt konisch gestaltet. Hierdurch lässt sich der Lagerzapfen bei der Montage des erfindungsgemäßen Füllstandssensors einfach in die Lagerbohrung einführen. Nachteilig ist hierbei jedoch, dass der Lagerzapfen in der Lagerbohrung klemmen kann. Der Lagerzapfen lässt sich gemäß einer anderen vorteilhaften Weiterbildung der Erfindung einfach in die Lagerbohrung einführen, ohne dass ein Klemmen zu befürchten ist, wenn der Lagerzapfen in seinem mittleren Bereich eine Querschnittsverringerung aufweist. Durch diese Gestaltung hat der Lagerzapfen nur in seinen Endbereichen Kontakt mit der Lagerbohrung. Selbstverständlich kann umgekehrt auch die Lagerbohrung eine Querschnittserweiterung aufweisen.

Der Bügel wird gemäß einer anderen vorteilhaften Weiterbildung der Erfindung auch bei hohen einseitig auf den Lagerzapfen wirkenden Kräften zuverlässig in dem Trägerteil geführt, wenn die Bohrung des Trägerteils als Stufenbohrung gestaltet ist und der Lagerzapfen des Bügels der Stufenbohrung entsprechende Abstufungen aufweist. Hierdurch lassen sich Lagerzapfen und das die Lagerbohrung aufweisende Trägerteil zudem kostengünstig in einer axial entformbaren Form herstellen.

Die Montage des Bügels an dem Trägerteil gestaltet sich gemäß einer anderen vorteilhaften Weiterbildung der Erfindung besonders einfach, wenn der Lagerzapfen an seinem freien Ende einen in radialer Richtung federnden, radial nach außen hin abstehenden Rastvorsprung zum Hintergreifen des Trägerteils aufweist. Hierdurch lässt sich der Bügel mit dem Lagerzapfen einfach in die Bohrung des Trägerteils einführen, bis der Rastvorsprung das Trägerteil am Ende der Bohrung hintergreift. Der Bügel ist anschließend axial unverschieblich gehalten.

Der Bügel und das Trägerteil gestalten sich gemäß einer anderen vorteilhaften Weiterbildung der Erfindung konstruktiv besonders einfach, wenn der Lagerzapfen einen umlaufenden Steg und das Trägerteil eine den Steg hintergreifende Rastzunge aufweist.

Bei besonders kostengünstigen Füllstandssensoren ist ein Schleifkontakt des Reglers auf dem Bügel und eine Widerstandsbahn auf dem Trägerteil angeordnet. Diese Gestaltung des Reglers erfordert jedoch einen besonders konstanten Abstand des Bügels zu dem Trägerteil. Ein konstanter Abstand des Bügels zu dem Trägerteil lässt sich gemäß einer anderen vorteilhaften Weiterbildung der Erfindung zuverlässig erzeugen, wenn der Bügel ein U-förmiges, zum Hintergreifen einer parallel zur Bewegungsebene des Bügels angeordnete Führungsrippe des Trägerteils vorgesehenes Führungselement aufweist. Zur Montage lässt sich der mit der Querschnittsverringerung oder stufenförmig gefertigte Lagerzapfen in der Stufenbohrung leicht kippen, so dass das Führungselement die Führungsrippe hintergreifen kann.

Der Bügel lässt sich gemäß einer anderen vorteilhaften Weiterbildung der Erfindung einfach an dem Trägerteil montieren, wenn das U-förmige Führungselement federnd gestaltet ist.

Die Befestigung des den Schwimmer tragenden Hebeldrahtes an dem Bügel gestaltet sich gemäß einer anderen vorteilhaften Weiterbildung der Erfindung konstruktiv besonders einfach, wenn der Lagerzapfen eine zentrale Bohrung zur Aufnahme des Hebeldrahtes aufweist. Eine Beschädigung der Bohrung der Lagerzapfen durch einen Grat am Ende des Nebeldrahtes führt dank der Erfindung nicht zu einer Behinderung der Bewegung des Bügels.

Der Hebeldraht ist gemäß einer anderen vorteilhaften Weiterbildung der Erfindung zuverlässig in der Bohrung gehalten, wenn er im Bereich der Bohrung des Lagerzapfens eine Biegung aufweist und wenn die Bohrung der Biegung des Hebeldrahtes entsprechend gestaltet ist.

Bei dem im Kraftstoffbehälter eines Kraftfahrzeuges eingesetzten Füllstandssensor wirken häufig hohe Biegemomente auf den Hebeldraht und damit auf den Bügel. Diese Biegemomente verändern damit den Abstand des Bügels zu dem Trägerteil. Hierdurch können der auf dem Bügel angeordnete Schleifkontakt von der auf dem Trägerteil angeordneten Widerstandsbahn entfernt oder die Widerstandsbahn beschädigt werden. Der vorgesehene Abstand des Bügels zu dem Trägerteil wird gemäß einer anderen vorteilhaften Weiterbildung der Erfindung auch bei starken auf den Hebeldraht wirkenden Biegemomenten zuverlässig gehalten, wenn der Hebeldraht auf der dem Bügel gegenüberliegenden Seite des Trägerteils angeordnet ist und wenn das Trägerteil jeweils einen Abstandhalter für den Bügel und den Hebeldraht aufweist. Durch diese Gestaltung werden auf den Hebeldraht wirkende Biegemomente von dem Trägerteil abgestützt und deshalb nicht mehr auf den Bügel übertragen. Der Abstand des Bügels gegenüber dem Trägerteil ist deshalb jederzeit konstant.

Der erfindungsgemäße Füllstandssensor weist eine hohe Stabilität auf, wenn der Bügel einen parallel zu dem Lagerzapfen angeordneten, das Trägerteil umgreifenden Arm und der Arm Rastelemente zur Halterung des Hebeldrahtes hat.

Bei dem in einem Kraftstoffbehälter angeordneten Füllstandssensor wird das Trägerteil in der Regel auf einer Fördereinheit befestigt. Die Fördereinheit weist häufig Anschläge zur Begrenzung der Bewegung des Bügels auf. Diese Gestaltung erfordert eine genaue Montage des Füllstandssensors auf der Fördereinheit. Der Füllstandssensor lässt sich gemäß einer anderen vorteilhaften Weiterbildung der Erfindung unabhängig von anderen Bauteilen montieren, wenn auf dem Trägerteil Anschläge zur Begrenzung der Schwenkbewegung des Bügels angeordnet sind.

Zusätzlich auf dem Trägerteil anzuordnende Anschläge lassen sich gemäß einer anderen vorteilhaften Weiterbildung der Erfindung vermeiden, wenn die Anschläge des Trägerteils im Bereich des Arms des Bügels angeordnet sind.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine Schnittdarstellung eines erfindungsgemäßen Füllstandssensors,
- Fig.2, 3: weitere Ausführungsformen des erfindungsgemäßen Füllstandssensors,
- Fig.4: eine Schnittdarstellung entlang der Linie IV - IV durch den Füllstandssensor aus Fig. 3,
- Fig.5: eine weitere Ausführungsform des erfindungsgemäßen Füllstandssensors,
- Fig.6: eine Schnittdarstellung durch eine weitere Ausführungsform des erfindungsgemäßen Füllstandssensors im Bereich eines Lagerzapfens.

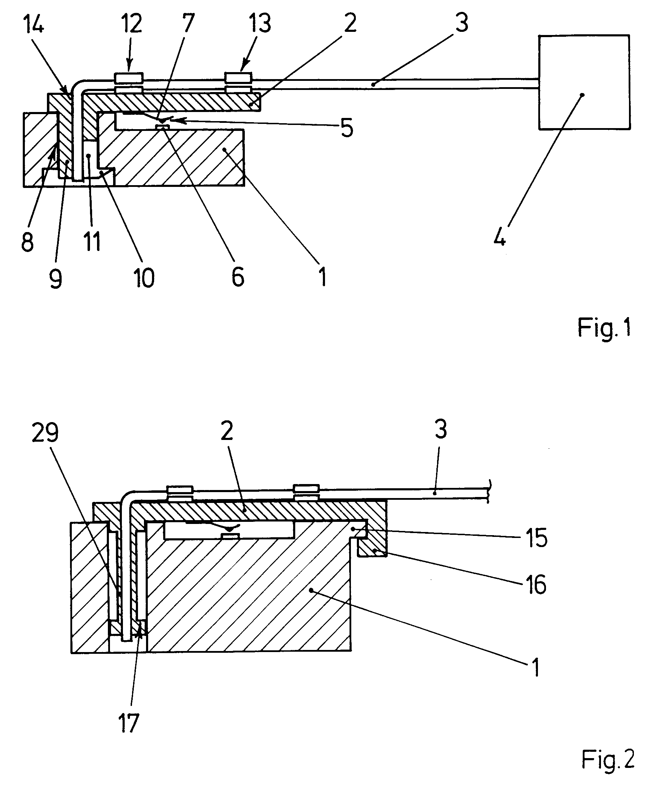

Die Figur 1 zeigt einen Füllstandssensor mit einem auf einem Trägerteil 1 schwenkbar und axial unverschieblich gelagerten Bügel 2. Auf dem Bügel 2 ist ein Hebeldraht 3 mit einem Schwimmer 4 befestigt. Weiterhin hat der Füllstandssensor einen Regler 5, der in Abhängigkeit von dem Neigungswinkel des Bügels 2 ein elektrisches Signal liefert. Der Regler 5 hat einen auf dem Bügel 2 angeordneten, über eine auf dem Trägerteil 1 angeordnete Widerstandsbahn 6 gleitenden Schleifkontakt 7. Der Füllstandssensor lässt sich beispielsweise in einem nicht dargestellten Kraftstoffbehälter eines Kraftfahrzeuges anordnen. Der Schwimmer 4 folgt dem Kraftstoffspiegel und verändert damit den Neigungswinkel des Bügels 2.

Der Bügel 2 ist einteilig mit einem in einer Bohrung 8 des Trägerteils 1 angeordneten Lagerzapfen 9 gefertigt. Der Lagerzapfen 9 hat an seinem freien Ende einen radial nach außen hin abstehenden Rastvorsprung 10 zum Hintergreifen des Trägerteils 1. Der Rastvorsprung 10 ist auf einer Federzunge 11 angeordnet und lässt sich zur Montage oder Demontage des Bügels 2 nach innen drücken. Im montierten Zustand verhindert der Rastvorsprung 10 eine axiale Bewegung des Lagerzapfens 9 des Bügels 2 in der Bohrung 8 des Trägerteils 1. Der Hebeldraht 3 ist an zwei auf dem Bügel 2 angeordneten Rastelementen 12, 13 befestigt. Weiterhin hat der Lagerzapfen 9 eine zentrale Bohrung 14 zur Aufnahme eines abgewinkelten Endes des Hebeldrahtes 3. Hierdurch ist der Hebeldraht 3 zuverlässig mit dem Bügel 2 verbunden. Der Rastvorsprung 10 ist gleichzeitig durch den Hebeldraht 3 gegen ein unbeabsichtigtes Wegbiegen gesichert.

Die Figur 2 zeigt eine weitere Ausführungsform des erfindungsgemäßen Füllstandssensors. Das Trägerteil 1 hat eine parallel zur Bewegungsebene des Bügels 2 angeordnete Führungsrippe 15. Diese Führungsrippe 15 wird von einem U-förmigen Führungselement 16 des Bügels 2 umgriffen. Hierdurch ist der Bügel 2 axial unverschieblich auf dem Trägerteil 1 angeordnet. Der Bügel 2 ist mittels eines eine Querschnittsverringerung 17 aufweisenden Lagerzapfens 29 in einer Bohrung 28 des Trägerteils 1 gehalten. Durch die Querschnittsverringerung 17 hat der Lagerzapfen 29 nur in seinen Endbereichen Kontakt mit der Bohrung 28. Die Gefahr eines Klemmens des Lagerzapfens 29 wird hierdurch besonders gering gehalten.

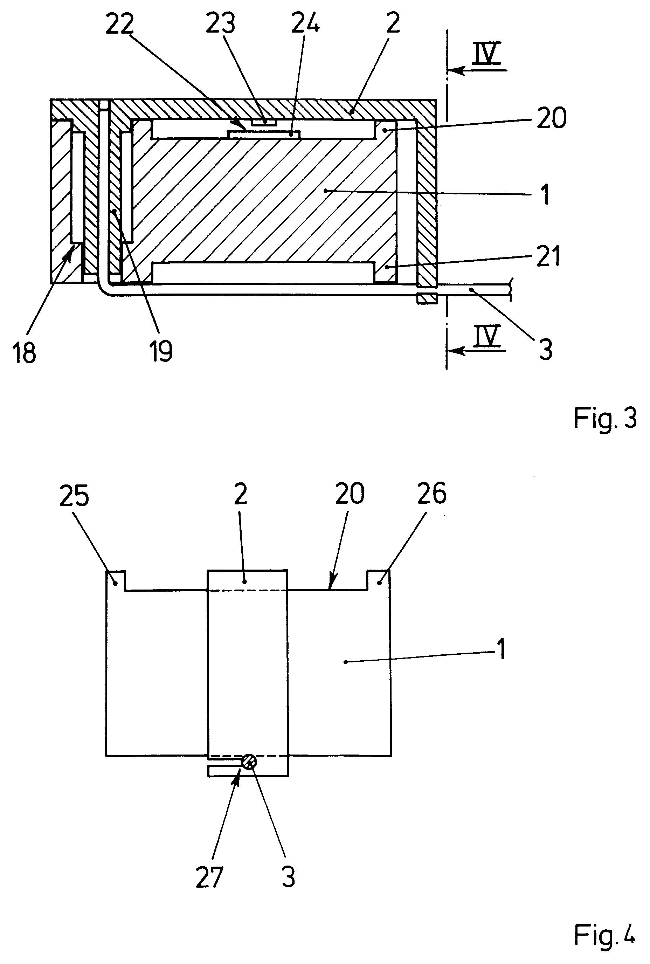

Die Figur 3 zeigt eine weitere Ausführungsform des erfindungsgemäßen Füllstandssensors. Das Trägerteil 1 hat eine Stufenbohrung 18 zur Aufnahme eines entsprechend gestalteten Lagerzapfens 19 des Bügels 2. Der Hebeldraht 3 ist auf der dem Bügel 2 gegenüberliegenden Seite des Trägerteils 1 angeordnet. Das Trägerteil 1 weist jeweils einen Abstandhalter 20, 21 für den Bügel 2 und den Hebeldraht 3 auf. Durch diese Gestaltung werden auf den Hebeldraht 3 wirkende Biegemomente nicht auf den Bügel 2 übertragen.

Der Neigungswinkel des Bügels 2 wird von einem als magnetisch passiven Positionssensor ausgebildeten Regler 22 erfasst. Der Regler 22 hat einen auf dem Bügel 2 angeordneten Magneten 23 und ein auf dem Trägerteil 1 befestigtes Widerstandsnetzwerk 24. Der Magnet 23 erzeugt in dem Widerstandsnetzwerk 24 elektrische Verbindungen, wodurch an dem Widerstandsnetzwerk 24 ein der Position des Magneten 23 zuzuordnendes elektrisches Signal abnehmbar ist.

Die Figur 4 zeigt den Füllstandssensor aus Figur 3 in einer Schnittdarstellung entlang der Linie IV - IV. Der Abstandhalter 20 für den Bügel 2 hat seitlich jeweils einen Anschlag 25, 26 zur Begrenzung der Bewegung des Bügels 2. Der Hebeldraht 3 ist in einem Rastelement 27 des Bügels 2 gehalten. Das Rastelement 27 ist einteilig mit einem parallel zu dem Lagerzapfen 19 angeordneten Arm gefertigt.

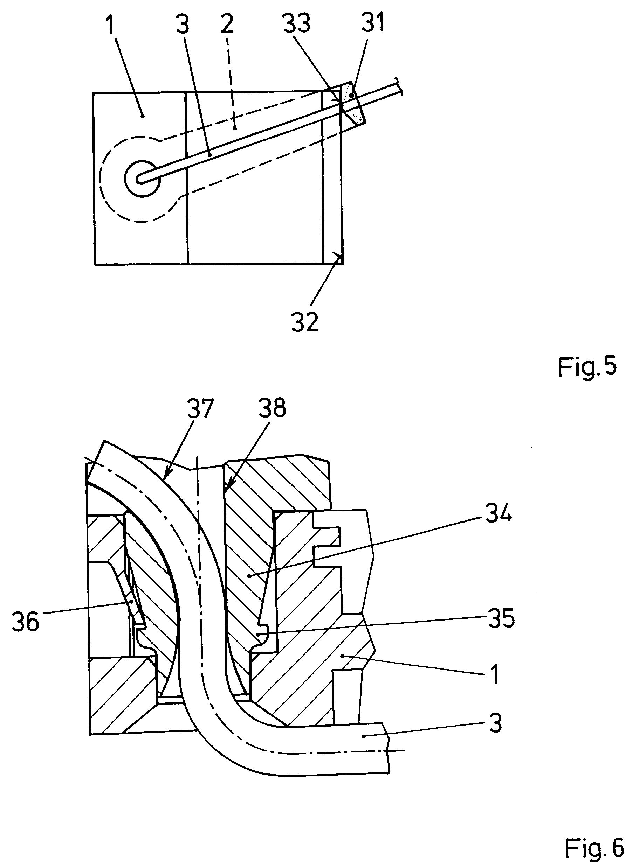

Die Figur 5 zeigt einen Füllstandssensor, der wie der Füllstandssensor aus den Figuren 3 und 4 einen zur Halterung des Hebeldrahtes 3 vorgesehenen Arm 31 aufweist. An dem Trägerteil sind seitlich zwei Anschläge 32, 33 zur Begrenzung des Schwenkbereichs des Arms 31 angeordnet.

Die Figur 6 zeigt eine Schnittdarstellung durch einen Lagerzapfen 34 und angrenzende Bereiche des Trägerteils 1 einer weiteren Ausführungsform des erfindungsgemäßen Füllstandssensors. Der Lagerzapfen 34 weist einen umlaufenden Steg 35 auf. An dem Tragerteil 1 ist eine Rastzunge 36 zur axialen Sicherung des Lagerzapfens 34 angeordnet. Der Hebeldraht 3 hat eine Biegung 37, mit der er in eine entsprechend gestaltete Bohrung 38 des Lagerzapfens 34 eindringt.

## Patentansprüche

1. Füllstandssensor, insbesondere zur Erzeugung von elektrischen Signalen in Abhängigkeit von einem Füllstand einer Flüssigkeit in einem Behälter, mit einem eine Bohrung für eine Lagerung aufweisenden Trägerteil, mit einem in der Lagerung schwenkbar und axial unverschieblich gehaltenen, einen Regler in Abhängigkeit von seinem Stellwinkel betätigenden Bügel und mit einem an dem Bügel befestigten, einen Schwimmer aufweisenden Hebeldraht, **dadurch gekennzeichnet**, dass der Bügel (2) einen Lagerzapfen (9, 19, 29, 34) der Lagerung aufweist.

2. Füllstandssensor nach Anspruch 1, **dadurch gekennzeichnet**, dass der Bügel (2) einteilig mit dem Lagerzapfen (9, 19, 29, 34) gefertigt ist.

3. Füllstandssensor nach zumindest einem der vorhergehenden Ansprüche, **dadurch gekennzeichnet**, dass der Lagerzapfen (29) in seinem mittleren Bereich eine Querschnittsverringerung aufweist.

4. Füllstandssensor nach zumindest einem der vorhergehenden Ansprüche, **dadurch gekennzeichnet**, dass die Bohrung des Trägerteils (1) als Stufenbohrung (18) gestaltet ist und der Lagerzapfen (19) des Bügels (2) der Stufenbohrung (18) entsprechende Abstufungen aufweist.

5. Füllstandssensor nach zumindest einem der vorhergehenden Ansprüche, **dadurch gekennzeichnet**, dass der Lagerzapfen (9) an seinem freien Ende einen in radialer Richtung federnden, radial nach außen hin abstehenden Rastvorsprung (10) zum Hintergreifen des Trägerteils (1) aufweist.

6. Füllstandssensor nach zumindest einem der vorhergehenden Ansprüche, **dadurch gekennzeichnet**, dass der Lagerzapfen (34) einen umlaufenden Steg (35) und das Trägerteil (1) eine den Steg (35) hintergreifende Rastzunge (36) aufweist.

7. Füllstandssensor nach zumindest einem der vorhergehenden Ansprüche, **dadurch gekennzeichnet**, dass der Bügel (2) ein U-förmiges, zum Hintergreifen einer parallel zur Bewegungsebene des Bügels (2) angeordnete Führungsrippe (15) des Trägerteils (1) vorgesehenes Führungselement (16) aufweist.

8. Füllstandssensor nach zumindest einem der vorhergehenden Ansprüche, **dadurch gekennzeichnet**, dass das U-förmige Führungselement (16) federnd gestaltet ist.

9. Füllstandssensor nach zumindest einem der vorhergehenden Ansprüche, **dadurch gekennzeichnet**, dass der Lagerzapfen (9, 19, 29, 34) eine zentrale Bohrung (14, 38) zur Aufnahme des Hebeldrahtes (3) aufweist.

10. Füllstandssensor nach zumindest einem der vorhergehenden Ansprüche, **dadurch gekennzeichnet**, dass der Hebeldraht (3) im Bereich der Bohrung (38) des Lagerzapfens (34) eine Biegung (37) aufweist und dass die Bohrung (38) der Biegung (37) des Hebeldrahtes (3) entsprechend gestaltet ist.

11. Füllstandssensor nach zumindest einem der vorhergehenden Ansprüche, **dadurch gekennzeichnet**, dass der Hebeldraht (3) auf der dem Bügel (2) gegenüberliegenden Seite des Trägerteils (1) angeordnet ist und dass das Trägerteil (1) jeweils einen Abstandhalter (20, 21) für den Bügel (2) und den Hebeldraht (3) aufweist.

12. Füllstandssensor nach zumindest einem der vorhergehenden Ansprüche, **dadurch gekennzeichnet**, dass der Bügel (2) einen parallel zu dem Lagerzapfen (19) angeordneten, das Trägerteil (1) umgreifenden Arm (30, 31) und der Arm (30, 31) Rastelemente (27) zur Halterung des Hebeldrahtes (3) hat.

13. Füllstandssensor nach zumindest einem der vorhergehenden Ansprüche, **dadurch gekennzeichnet**, dass auf dem Trägerteil (1) Anschläge (25, 26, 32, 33) zur Begrenzung der Schwenkbewegung des Bügels (2) angeordnet sind.

14. Füllstandssensor nach zumindest einem der vorhergehenden Ansprüche, **dadurch gekennzeichnet**, dass die Anschläge (32, 33) des Trägerteils (1) im Bereich des Arms (31) des Bügels (2) angeordnet sind.
